# EUROPEAN PATENT SPECIFICATION

(11) **EP 3 332 042 B1**
(45) Date of publication and mention of the grant of the patent: **18.11.2020**
(21) Application number: 16760167.3
(22) Date of filing: 25.07.2016
(51) Int. Cl.: C22B 3/00, C22B 7/00, B22F 1/00

(54) **METHOD OF RECYCLING PRECIOUS METALS FROM WASTE MATERIALS AND USE OF PRECIOUS METAL NANOPARTICLES OBTAINED BY THIS METHOD**
VERFAHREN ZUR RÜCKGEWINNUNG VON EDELMETALLEN AUS ABFALLSTOFFEN UND VERWENDUNG VON EDELMETALLNANOPARTIKELN NACH DIESEM VERFAHREN
PROCÉDÉ DE RECYCLAGE DE MÉTAUX PRÉCIEUX À PARTIR DE DÉCHETS ET UTILISATION DE NANOPARTICULES DE MÉTAUX PRÉCIEUX OBTENUES PAR CE PROCÉDÉ

(30) Priority: 07.08.2015 PL 41345615
(43) Date of publication of application: 13.06.2018
(73) Proprietor: Uniwersytet Warszawski, 00-927 Warszawa (PL)
(72) Inventor: WOJCIK, Michal, 26-910 Magnuszew (PL); PROMINSKI, Aleksander, 40-111 Katowice (PL); JANCZUK, Zuzanna, 43-100 Tychy (PL); LEWANDOWSKI, Wiktor, 25-635 Kielce (PL)
(74) Representative: Patpol Kancelaria Patentowa Sp. z o.o.
(86) International application number: PCT/IB2016/054420
(87) International publication number: WO 2017/025834

(56) References cited:
- WO-A1-2014/166494
- US-A1- 2009 301 260
- MANIS KUMAR JHA ET AL: "Hydrometallurgical recovery/recycling of platinum by the leaching of spent catalysts: A review", HYDROMETALLURGY., vol. 133, 1 February 2013 (2013-02-01), pages 23-32, XP055296220, NL ISSN: 0304-386X, DOI: 10.1016/j.hydromet.2012.11.012
- TAPAN K. SAU ET AL: "Properties and Applications of Colloidal Nonspherical Noble Metal Nanoparticles", ADVANCED MATERIALS, vol. 22, no. 16, 22 April 2010 (2010-04-22), pages 1805-1825, XP055034190, ISSN: 0935-9648, DOI: 10.1002/adma.200902557
- LEE J Y ET AL: "Solvent extraction separation and recovery of palladium and platinum from chloride leach liquors of spent automobile catalyst", SEPARATION AND PURIFICATION TECHNOLOGY, ELSEVIER SCIENCE, AMSTERDAM, NL, vol. 73, no. 2, 18 June 2010 (2010-06-18), pages 213-218, XP027066660, ISSN: 1383-5866, DOI: 10.1016/J.SEPPUR.2010.04.003 [retrieved on 2010-04-10]

## Description

### FIELD OF THE INVENTION

The invention provides a process for recycling precious metals from waste materials comprising recovering the precious metals and their conversion into nanoparticles, and use of said process.

### PRIOR ART

Precious metals have been widely used in the automotive industry, chemical catalysts, cosmic materials and the pharmaceutic industry. The materials are characterized by finite working lifetime, after which they are inactivated. Deactivated materials are considered waste to be recycled, which is of economic importance. Natural resources of precious metals are limited, therefore recovery of said metals from secondary sources is highly desirable.

The prior art includes solutions concerning recovering and processing precious metals from waste materials.

The Japanese patent application JP 2014201821 discloses a process for collecting precious metals, such as platinum, gold, wherein the precious metals are recovered as nanoparticles, said process comprising providing a solution of the dissolved precious metals and contacting a composite media/complex of a metal-reducing substance produced in a bacterial culture and component-medium.

Furthermore, U.S. Patent Application No. US 20130174694 discloses a process for recycling precious metals from electronic waste comprising steps of grinding the waste, separating rubber and plastic parts, separating ferromagnetic metals, microwave melting, filtering, electrolysis and extraction to separate the precious metals.

US 2009/301260 is related to a method for recovering a catalytic elements, such as ruthenium, palladium, gold, and rhodium, from a fuel cell membrane electrode assembly, wherein said method comprises grinding the membrane electrode assembly into a powder, extracting the catalytic element by forming a slurry comprising the powder and an acid leachate adapted to dissolve the catalytic element into a soluble salt, and separating the slurry into a depleted powder and a supernatant containing the catalytic element salt. In this method the depleted powder is further washed to remove any catalytic element salt retained within its pores and the catalytic element is purified from the salt.

Meanwhile, there are no solutions in the prior art wherein recycling waste materials containing precious metals would comprise not only isolating the precious metals as solid pure powder concentrates of precious metals or else the precious metals in a metallic form (after high-temperature melting), but also further processing thereof, including possibility of restoring a full-value starting material. The prior art did not also disclose any solutions which would allow to obtain nanoparticles, including bimetallic nanoparticles, while not employing a mixed precursor made from precious metals of high purity in the order of 99%, which materials are commercially available, yet their significantly high prices restrict sometimes wide-scale use of nanoparticles.

Consequently, there is a constant need for designing a process for recycling precious metal-containing waste materials, which would comprise also preparation of nanoparticles or/and nanocoatings of precious metals and applying thereof onto a substrate.

Unexpectedly, the goal was achieved by the present invention.

### DISCLOSURE OF THE INVENTION

The invention provides a method for recycling precious metals from waste materials, wherein said method is characterized by comprising the following steps:
**a)** providing a powder of the waste material with the particle size not greater than 0.03 mm, preferably not greater than 0.02 mm, more preferably in the range from 0.01 mm to 0.3 mm, and most preferably amounting to 0.02 mm, obtained directly from waste materials by mechanical grinding thereof,
   said grinding being optionally preceded by thermal treatment, preferably burning or calcining the waste materials, or the waste material powder obtained by grinding could be thermally treated, preferably by burning or calcination,
**b)** digesting the powder obtained in step (a) under oxidizing conditions in the presence of a mixture of concentrated hydrochloric acid and hydrogen peroxide or a mixture of concentrated hydrochloric, nitric and sulfuric acids, till complete digestion of the precious metals contained therein to produce a suspension, wherein the digesting solution-to-digested material mass ratio is from 1:10 to 10:1, and preferably 3:1,
**c)** isolating a sediment from the suspension obtained in step (b) after the digestion to provide an acidic concentrate of the precious metal ions, and optionally rinsing the isolated sediment with a mixture of inorganic or organic acids at a concentration of 0.001 M to 12 M, and combining the metal ion solution resulted from rinsing the sediment with acidic concentrate obtained after isolating the sediment,
**d)** a qualitative analysis of the composition of the acidic precious metal ion concentrate, optionally enriched with the precious metal ion solution resulting from rinsing the sediment, of step (c), combined with a quantitative analysis of their concentrations by ICP, and preferably ICP-MS,
**e)** selectively isolating precious metals from the precious metal ion concentrate, optionally enriched with the precious metal ion solution resulting from rinsing the sediment, of step (c), and from the contaminants present therein, by means of a phase transfer agent (PTA), which comprises an organic reagent selected from the group of phosphates, thiophosphates, polyphosphates, amines, ammonium salts, alcohols or an inorganic reagent selected from the group of neutral salts or metals, and preferably includes Aliquat@, trioctylamine or LIX®, wherein the selective isolation of the precious metals can optionally be preceded by precipitation of metals, preferably non-precious metals constituting contaminants, with an assistance of precipitating agents,
**f)** precipitating the precious metals isolated in step (e) in the form of inorganic or organometallic salts and/or reducing the precious metals, optionally in the presence of a surfactant, to obtain nanoparticles selected from a group of monometallic, bimetallic, trimetallic, multimetallic nanoparticles, nanoparticles doped with non-precious metals, core-shell type nanoparticles or hollow nanoparticles,
said reducing agent being selected from the group comprising: hydrogen, glycol, hydrochloric acid, polyvinylpyrrolidone, NaBH₄, KBH₄, plant extracts, such as a Diospyros kaki extract, red pine extract, Ocimum Sanctum extract, green tea extract, amino acids, citric acid, flavonoids, substances with oxygen-containing functional groups, such as alcohols, aldehydes, ketones, amines, carboxylic acids, thioles, heterocyclic compounds, peptides, phenols, polyphenols, polyhydric alcohols, quercetin, reducing sugars, tannic acid, tartaric acid, terpenoids, oleylamine, dodecylamine, octadecylamine, ascorbic acid and its derivatives, dimethylamine borane (DMAB), formic acid, formaldehyde or combinations thereof.

In a preferred embodiment, steps (d), (e) and/or (f) are repeated together or separately in the same or altered order. In particular, quantitative and/or qualitative analysis may be conducted following each isolation of a precious metal by means of PTA or precipitation of contaminating metals or precious metals from the acidic precious-metal-ion concentrate by means of precipitating agents. The step of preparation of nanoparticles from precious metals by reduction may be preceded by precipitation of precious metal salts or alternatively it may be conducted directly from the solution, in particular from the organic phase into which the precious metal has been extracted by means of PTA.

The steps of precipitating precious metal salts and of reduction may also be repeated sequentially, for example for different precious metals, resulting in layered nanoparticles (e.g. a core-shell type). It is also possible to co-precipitate salts of more than one precious metal, followed by their reduction to obtain homogeneous nanoparticles of mixed composition (i.e. nanoparticles of precious metal alloys). In any such case, bimetallic, trimetallic or multimetallic nanoparticles are obtained.

In a preferred embodiment, the thermal treatment of the waste materials in step (a) is conducted at 250°C for about 6 hours. Alternatively, the thermal treatment of the waste materials is conducted by burning at 800-1000°C or calcining at high temperatures, e.g. at 200-300°C.

It is preferable that the step (b) of the method according to the invention is conducted at the temperature higher than 45°C for 8 hours, more preferably at 70°C for more than 2 hours by gravity filtering or centrifuging, or preferably, by filtering, with the hydrochloric acid concentration of from 0.001 M to 12 M, hydrogen peroxide concentration of from 0.1% do 5%, nitric acid concentration of from 0.001 M to 15 M and sulfuric concentration acid of 0.01 M to 18 M.

Also preferably, in the step (c) of the method according to the invention, isolating the precipitate is conducted by filtering or centrifuging, and more preferably by filtering under reduced pressure.

In a preferred embodiment, the acids employed in the step (c) for rinsing of the precipitate are selected from the group consisting of hydrochloric, sulfuric, nitric, orthophosphoric or hydrofluoric acid.

It is preferable that the precipitating agents used for isolating contaminating metals from the solution in the step (e) and the precious metals in the step (f) comprise phosphate salts (e.g. Na₃PO₄) and thiourea.

The invention provides also use of the method according to the invention for the preparation of bimetallic nanoparticles (i.e. nanoparticles obtained in the method according to the invention constitute a matrix which is covered by successive metal layers) and/or for coating various kinds of substrates, preferably inorganic or organic substrates and for the preparation of colloidal nanoparticle solutions.

Advantages and benefits of the invention present will be more clear on the basis of the following detailed description of the invention and the working examples thereof.

### SHORT DESCRIPTION OF THE DRAWINGS

The subject-matter of the invention is illustrated on the drawing, wherein:

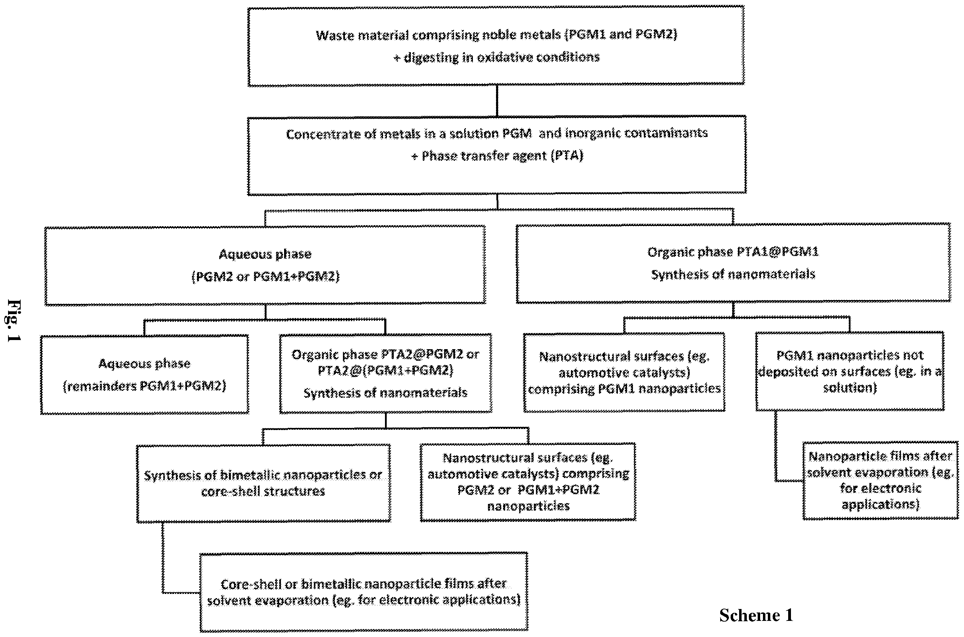

**Fig. 1** shows an illustrative diagram, according to which the method of the invention can be implemented, wherein the starting material is the waste material containing the precious metals (denoted as PGM1 and PGM2), and the final products are nanoparticles, nanoparticle films and nonstructural surfaces.

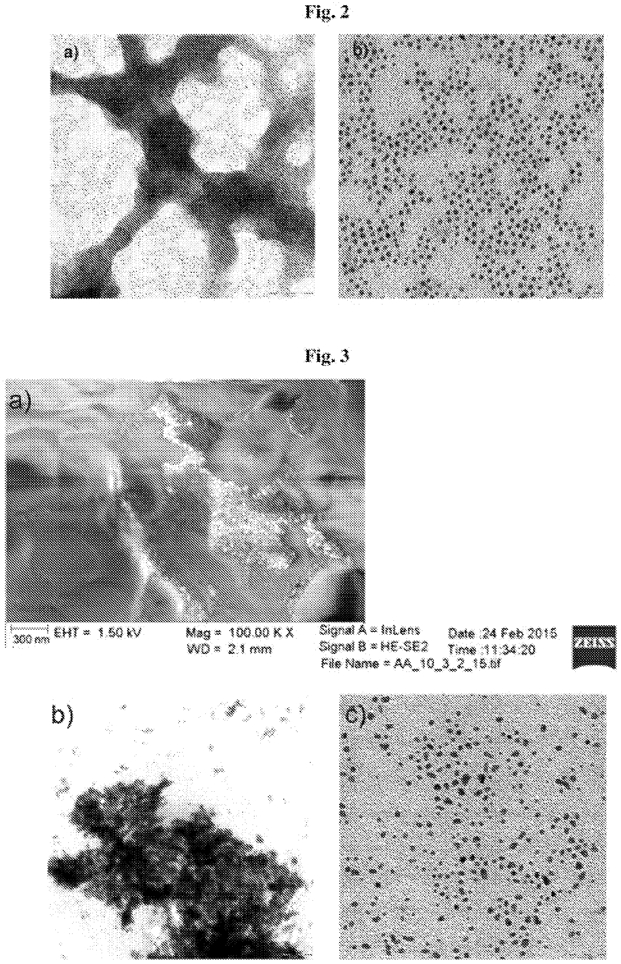

**Fig. 2** shows photographs of the Pt nanoparticles obtained in Example 1, which were taken by means of a transmission electron microscope. a) a single EtOH rinse of the precipitate b) a triple EtOH rinse of the precipitate. At the photograph on the left, organic contaminants (dark fields - phase transfer agent and dodecylamine residues) are visible.
**Fig. 3** shows SEM photographs of dodecylamine-covered Pt nanoparticles of Example 1, (a) revealing nanoparticle aggregates deposited on cordierite, a TEM image of nanoparticles collected as a portion of the material from cordierite, dissolved in toluene and applied onto a TEM grid (b), (c) and the EDX spectrum (d) recorded from the cordierite surface with deposited nanoparticles. The digital results of EDX (e) confirm the presence the Pt nanoparticles. The EDX spectrum contains also signals of cordierite and a silicon substrate, upon which the cordierite material was investigated.

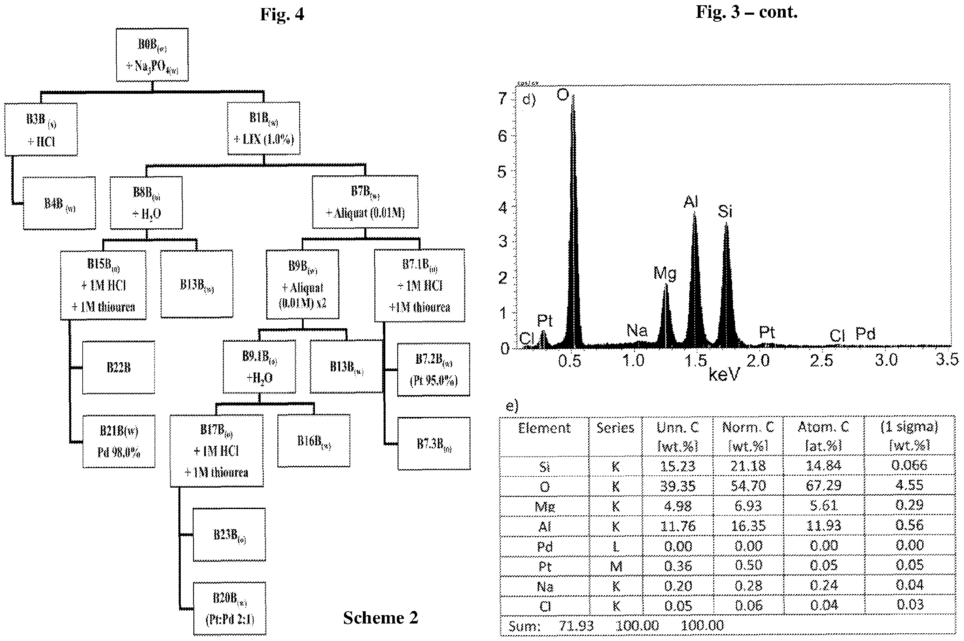

**Fig. 4** shows a diagram for carrying out the method according to the invention as described in Example 2. First, a solution comprising a mixture of precious metals prepared by dissolving waste materials is partitioned. In subsequent steps, both organometallic salts of individual metals with a 95-98% purity, as well as organometallic or inorganic salts of mixtures of metals, e.g. in the 2:1 ratio, could be isolated. Both organometallic and inorganic salts can be used in deposition of precious metals at solid surfaces.

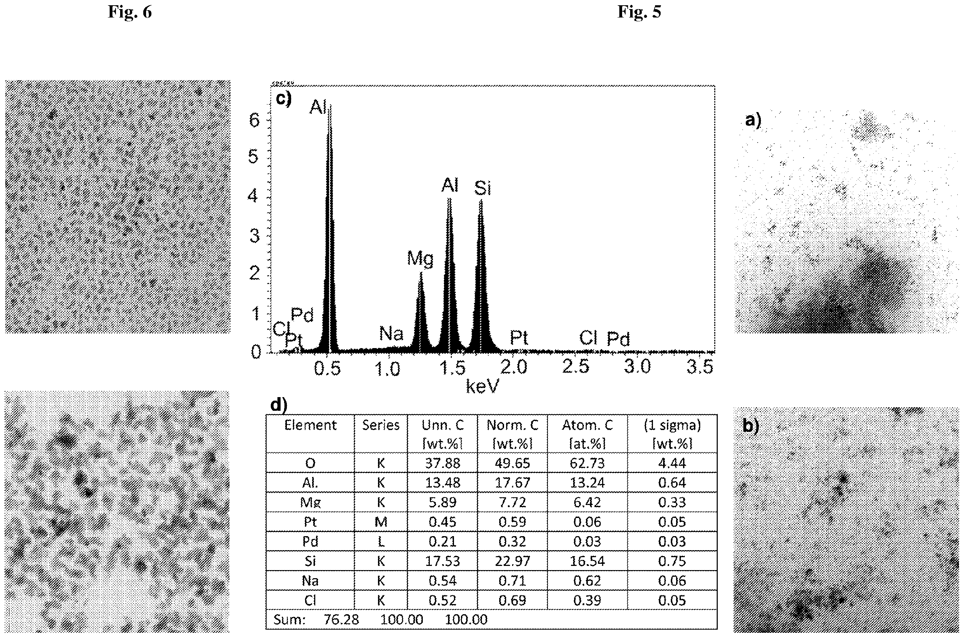

**Fig. 5** shows TEM photographs of the Pt_{0.65}Pd_{0.35} nanoparticles obtained in Example 2, coated with PVP (a), (b) and the EDX spectrum (c) recorded from a thin film prepared by evaporation of the nanoparticle solution. The digital results of EDX (d) indicate preparation of nanoparticles in the atomic Pt to Pd ratio ∼ 2:1. The EDX spectrum contains also signals of cordierite and a silicon substrate, upon which the cordierite material was investigated.
**Fig. 6** shows photographs of the Pt/Pd nanoparticles of Example 2 having irregular shapes, prepared by a reduction reaction of a Pt and Pd ion mixture in the form of a complex with Aliquat in an organic phase, by means of hydrogen in the presence of surfactant mixture of dodecanethiol and dodecylamine.

### DETAILED DESCRIPTION OF THE INVENTION

The method according to the invention provides a method for recovering one or more precious metals, in particular platinum, palladium, rhodium, gold or mixtures thereof, from waste materials containing precious metals, said recovered metals being isolated in the form of organometallic salts or inorganic precursors obtained therefrom, and subsequently converted to precious metal nanoparticles that could be employed for example for covering various kinds of substrates. Therefore, the method according to the invention provides an effective process for recycling of precious metals.

By the method according to the invention, precious metals can be recovered from both waste materials having a high concentration of a pure metal (precious metal scraps, e.g. platinum jewelry), as well as waste material mixtures with a precious metal concentration as low as even below 0.1% (e.g. automotive catalysts, chemical catalysts, crude oil processing catalysts and electronic devices, monolithic ceramic condensers, hybrid integrated circuits, electric electrodes and glass materials, liquid crystal display parts, fuel cell parts, thermocouples). In particular, by the method according to the invention, precious metals in the form of nanoparticles are recovered from spent automotive catalysts, electronic waste and post-industrial catalysts of chemical processes, such as catalytic gauzes.

The method according to the invention enables recovery of precious metals from waste materials with varying precious metal content, with preferable content of precious metals in the waste material being in the range of 0.1-15%.

In the first step of the method according to the invention (step a)) the waste materials are ground mechanically (by crushing, milling) to reach the particle size of about 0.02 mm. In the case of some kinds of waste materials (catalytic gauzes, electronic sub-assemblies), to enhance removal of hydrocarbons, polymers and carbon as such from particle surfaces, before the grinding step the waste materials are subjected to a thermal pre-treatment step comprising burning the waste materials of electronic sub-assemblies at 800-1000°C or calcination at high temperatures of the order of 300°C.

To verify obtaining of the suitable particle sizes in the grinding process, a morphological analysis of the comminuted waste material can be conducted by means of a scanning electron microscope.

In the subsequent step of the method according to the invention (step b)) the waste-material powder obtained is subjected to digesting in strong oxidative conditions in the presence of concentrated hydrochloric acid and hydrogen peroxide or a mixture of concentrated hydrochloric, nitric and sulfuric acids, until complete dissolution of the precious metals contained therein.

In the course of the work on the invention the inventors have determined that to assure optimal isolation conditions for precious metals, a mass ratio of the digesting solution to a digested material (waste material) should be from 1:10 to 10:1, and most preferably 3:1. It is therefore advisable to conduct an additional quantitative and qualitative analysis of the precious metal content in the waste material powder before the digestion process. Based on the results of said analysis, concentrations of reagents forming the oxidative mixture can be selected.

Preferably, in the method according to the invention, the step b) is conducted at from 45°C for 8 hours or at 70°C for from 2 hours, wherein the hydrochloric acid concentration is from 0.001 M to 12M, the hydrogen peroxide concentration is from 0.1% to 5%, the nitric acid concentration is from 0.001 M to 15 M, and the sulfuric acid concentration is 0.01 M to 18 M.

In the subsequent step of the method according to the invention (step c)), a qualitative analysis of the acidic metal ion suspension composition along with a quantitative analysis of concentrations thereof is conducted by ICP (plasma mass spectrometry), preferably ICP-MS (plasma mass spectrometry inductively coupled with quadrupole analyzer).

After the dissolution under oxidizing conditions, a precipitate is isolated from the acidic suspension obtained, such isolation being possible by gravity filtering or centrifuging, preferably by filtering under reduced pressure. The precipitate may be subjected to additional chemical analysis, from the point of view of precious metal dissolution efficiency - to this end, a 1 g sample of the precipitate after filtration is withdrawn and dissolved in 10 ml of the HCl:HNO₃:HF solution in the ratio of 10:2:0.5 and re-analyzed by ICP-MS.

In the subsequent step of the method according to the invention, an acidic metal concentrate is prepared. To this end, a mixture of inorganic or organic acids of a concentration of 0.001 M to 12 M, preferably an acid selected from the group of hydrochloric, sulfuric, nitric, orthophosphoric or hydrofluoric acids is added to the filtrate obtained after separation from the acidic suspension of the precipitate. In addition, the precipitate obtained from separation from the suspension is rinsed with a diluted solution of the acid mixture and the filtrate is added to the acidic metal concentrate.

The acidic environment generated thereby stabilizes efficiently ions of metals which will be isolated from the concentrate.

In the subsequent step, selective purification of the precious metal concentrate is conducted by means of a phase transfer agent (PTA).

Various phase transfer agents can be used for the phase transfer. Specific PTA can be employed for isolation of the platinum group metals (PGM), or other precious metals from an aqueous acid solution, where a metal is present in an anionic complex form. This method is pH-independent and can be used in aqueous solutions in the entire range of the pH scale. The extraction method is based on contacting an aqueous phase with PTA with formation of a complex between PTA and platinum group metals present in the solution. The complex may be formed also with other metals. As a result, PTA can bring the metal from the aqueous phase to the organic phase. With the suitable contact time, isolation occurs and the metal passes from the aqueous phase to the organic phase.

A solvent employed as a part of the organic phase, used for separating the aqueous phase from the organic phase, should have a significantly different density from the aqueous phase. The volume ratio between the organic phase and the aqueous phase may range between 1/10 and 10/1 during extraction, and the use the organic phase consisting solely of the phase transfer agent is also possible. During deextraction (precipitation of ions) said ratio can be about 1/5 and 50/1. In such a process, precipitating salts or reduction with the use of reducing agents may be employed. To conduct the extraction process, organic reagents can be used such as phosphates, tiophosphates, polyphosphates, amines, ammonium salts, phosphonium salts, heterocyclic ammonium and phosphonium salts, oximes, aldehydes, ketones, carboxylic acids, amino acids, quinolines, alcohols, which exhibit solubility and separation-enhancing properties for the system. The organic phase, which contains the phase transfer agent (PTA), can comprise aliphatic, cyclic or aromatic hydrocarbons such as: hexane, heptane, cyclohexane, benzene, toluene, xylene, etc., chlorinated derivatives: carbon tetrachloride, chloroform, dichloromethane, tetrachloroethane, etc., water-insoluble ketones, ethers etc. Solvents are mostly used in a pure form or as a mixture of several solvents, including crude oil or processed crude oil, that is to say high flash point fractions, such as light and heavy kerosene, pure kerosene, paraffin and naphtha solvents.

Every time, an equilibrium is established between concentrations of a metal in the aqueous and organic phases, with the insufficient phase transfer coefficient, a repeated extraction process with a fresh PTA solution can be required. In some cases of a direct nanoparticle synthesis, and most often in the case when sodium borohydride is used as a reducing agent, separation of the aqueous and organic phases is not required.

Selective purification of the precious metal concentrate from contaminants by means of a phase transfer agent PTA allows to extract just such metals or mixtures thereof which are intended to be recovered from the concentrate, with remaining metals considered as impurities. The method according to the invention not only allows to isolate metals from the concentrate, but also, by use of suitable salts or organic compounds, allows also to separate them and obtain organometallic salts of individual metals with a purity of 70-99.5% based on the specific metal, or obtain also inorganic salts after proper precipitation.

A change in a PTA structure can lead not only to differences in properties of the extracting solvent, but also establishes the path to a synthesis of nanomaterials. To provide good solubility in non-polar solvents, the structure of PTA can contain aliphatic chains defined mainly by means of a number of chain carbon atoms and defined by an integer of from 2 to 21. The PTA chain can be a saturated or unsaturated, straight or branched chain. A ring in the PTA structure can also be a saturated or unsaturated, substituted or unsubstituted ring. PTA can function as a selective extractant, as well as a main surfactant in the aqueous solution containing anions of appropriate metals and contaminating metals. The contaminants can comprise such elements as: Pb, Al, Ba, Ce, Zr, Fe, Cu, Co, Ni, Mo, Sn, Sb, As, Bi, Zn, Na, K, Ca and mixtures thereof, while the illustrative metals to be isolated can be: Ag, Au, Pd, Rh, Pt, Ru, Os, Ir and mixtures thereof. PTA is used for selective extraction of one or more anionic complexes of metals in sequence. In some cases, extraction can be non-selective, if several metals are transferred by PTA at the same time. PTA can be non-selective both against the platinum group metals as well as the contaminating metals. Such a method is pH-independent, despite of the metals being mostly soluble in solutions of strong acids.

PTA can extract metals vary efficiently regardless of concentration of the acid employed for dissolving the metals. A metal-containing aqueous phase can remain in contact with PTA for the specified period, e.g. 180 min., 60 min., 30 min., 20 min. or 10 min., and preferably for 20 minutes. A concentration of PTA in an organic solution is any concentration which leads to saturating the organic phase with metal ions in the form of complexes, with preferable proportions of between 0.1% by weight and 15% by weight, and more preferably 0.5% - 4% by weight. To enhance extraction of the metals, a molar excess of PTA over the recovered metal level in the organic solution is used. In some cases, a deficit of PTA can be required. The organic solvent must dissolve the one or more PTA well and cannot be water-miscible, with toluene, benzene, chloroform, dichloromethane, hexane, 1-octanol, butanol, kerosene, diphenyl ether, diethyl ether, dioctyl ether, extraction kerosene, gasoline, fuel oil or mixtures thereof being most widely used. PTA is a water-immiscible substance. The method according to the invention is not restricted to PTA dissolved in organic solvents, as PTA supported on solid surfaces such as polymers or resins can also be used according to the invention. In such cases, the aqueous solution of the acidic metal concentrate is mixed with the PTA-containing solid phase, or the aqueous solution of the acidic metal concentrate is brought in contact with the PTA-containing solid phase surface (e.g. flows upon the PTA-containing solid phase).

The phase transfer agent used according to the invention can be an organic reagent selected from the group of phosphates, thiophosphates, polyphosphates, amines, ammonium salts, alcohols or an inorganic reagent selected from the group of neutral salts of metals. Preferably, PTA is a water-insoluble quaternary amine salt, e.g. as the one commercially available under the trade name Aliquat@, trioctylamine or hydroxyoxime group compounds, e.g. as available under the trade name LIX®.

With the method according to the invention, palladium can be selectively recovered from the acidic metal concentrate. For example, by contacting the aqueous phase with an agent which selectively binds palladium such as LIX® (a trademark of BASF Group, LIX series, for example 84-1 (2-hydroxy-5-nonylacetophenone oxime). LIX, as an organic solvent-dissolved and water-immiscible reagent, binds palladium when contacted with the aqueous phase metal concentrate and palladium is transferred from the aqueous phase to the organic phase.

LIX can selectively bind specific ions within the defined molar ratio for the given element only, and going beyond such a limit may result in a loss of selectivity and binding additional metal ions. Analogically to palladium recovery, platinum can be recovered with the aqueous phase remaining in contact with Aliquat@ (a trademark of BASF Group, Aliquat series, e.g. Aliquat 336 is a water-insoluble quaternary ammonium salt prepared by methylating trioctyl/decylamine mixtures) or its solution in one of the above-mentioned solvents. In the same way, TOA (trioctylamine) can be also used. TOA binds ions of both platinum and rhodium, and in this way both metals can be successively transferred from the aqueous phase to the organic phase. If an adequate amount of TOA is used, platinum only can be selectively transferred, with rhodium remaining in the aqueous phase. Said method enables dissolving the metals in an aqueous acid solution containing suitable amount of PTA dissolved in an organic solvent (for example LIX®, to recover palladium, Aliquat@ to recover platinum or TOA to recover a mixture of platinum and rhodium, or platinum alone), where binding of PTA with metal ions occurs and the metal passes into the organic phase, with resulting isolation of the platinum metal from the metal mixture.

Selected PTAs demonstrate good selectivity between contaminants and the precious metals. Studying the influence of reaction media on extraction performance of such PTAs as Aliquat, TOA, and LIX, the inventors observed that Aliquat and TOA are pH-independent and function properly in any media, while in the case of LIX, the pH should be slightly increased to isolate palladium selectively. Not all PTAs are equally efficient in extracting the given precious metal from the aqueous solution.

Table 2 related to Scheme 2 presented on Fig. 4 illustrating the method according to the invention from Example 2 shows selectivity of PTA at different concentrations of precious metals in the aqueous solution. As it is clear from Table 2, LIX extracts Pd most efficiently at suitable pH, with Rh being the most difficult to isolate, since it remains almost entirely in the aqueous layer. In the case of Aliquat, Pt is extracted best of all, while Pd and Rh are extracted much less efficiently. When the critical amount of Aliquat is exceeded, palladium is extracted as well, which results in a mixture of organometallic complexes. This technique includes a multi-step process for selective isolation of precious metals from spent platinum group metal-containing catalysts. The method is advantageous because with its aid platinum group elements dissolved in an aqueous acid solution can be effectively recovered and separated. Depending on available options, Pd is isolated by means of LIX, Aliquat is added after recovery of Pd to isolate Pt, or a Pt and Pd mixture. It should be noticed that by employing LIX first, Pd can be separated from Pt/Rh and Pt, and this way PTAs are used not only for separating precious metals from contaminants, but also for separating precious metals as such. As it was disclosed hereinabove, the extraction can comprise three process subgroups, such as PTA saturation, separation of metals and reduction to nanomaterials or precipitation of deposited metals from a complex compound. Each minor process can be carried out many times or can be entirely omitted. However, the aim of each subprocess is to separate as much contaminants accompanying the precious metals as possible.

After extracting the selected precious metal from the acidic metal concentrate, the precious metals are precipitated according to the invention in the form of inorganic or organometallic salts and said precious metals are reduced, optionally in the presence of a surfactant, to obtain nanoparticles.

In the case of the lack of an additional surfactant, nanomaterials can be originally coated with PTA. Use of surfactants allows to obtain both hydrophilic and lipophilic nanoparticles of the precious metals. The nanoparticles can be obtained in the form of fresh layers on supports (e.g. on an inorganic or organic, e.g. polymeric, substrate), as well as in the form of colloidal solutions. The obtained nanoparticle layers can possess partly restored chemical (e.g. catalytic) properties or completely novel chemical (e.g. catalytic) properties.

If PTA is dissolved in an organic water-immiscible solvent, it is possible to synthesize the nanoparticles in the organic phase or partly in the aqueous phase, as well as at the interface. If this is the case, separation is obtained by isolating the aqueous solution not miscible with the organic solution, with nanoparticles contained in both phases, as well as at the interface.

Depending on PTA used and the presence or absence of an externally added surfactant, systems can be obtained comprising spherical and non-spherical nanoparticles that can be separated from the reaction mixture. It is preferable to separate the nanoparticles having a uniform shape and characterized by a narrow size distribution range (i.e. the particle size distribution is relatively narrow). The method allows mostly to obtain spherical nanoparticles. In particular circumstances, nanoparticles having the following shapes can be obtained: sphere, cube, tetrahedron, octahedron, truncated tetrahedron and octahedron, nanofibers, nanowires, nanowire grids, nanotubes, nanoflowers, nanospheres, dendritic-shaped nanoparticles and amorphous aggregates. If nanoparticles are prepared in another way, non-spherical nanoparticles of an individual platinum group element can be obtained. Nanoparticles of palladium which are spherically and non-spherically shaped, e.g. polyhedrally shaped or highly branched or amorphous, can be obtained. Rhodium can form nanoparticles which are spherical and non-spherical of the shape of a cube, octahedron, tetrahedron, cuboctahedron, decahedron, icosahedron, face-centered cube, triangular plates, cubes with vertices, ultrafine undulated nanowires and amorphous aggregates. Some of the above-mentioned examples can contain 80, 85, 90, 95 or even 99% of the non-spherical nanoparticles. In other instances the synthesis can lead to other spherical and non-spherical nanoparticles. For example, non-spherical nanoparticles can be synthesized by blending the raw material of two or three desired metals, in the presence of PTA, to give bimetallic or trimetallic nanoparticles. It non-spherical dendritic Pt-Pd nanoparticles can be obtained most easily, but it is also possible to obtain nanowires, cuboctahedrons, face-centered cubes, cubes, amorphous aggregates. On the other hand, Pt-Rh nanoparticles of the 2 nm diameter are cube-shaped, but it is also possible to obtain nanostars and amorphous aggregates. The nanoparticles obtained can contain admixtures of the raw material-contaminating metals such as: Al, Mg, Fe and the like.

The developed method provides a direct synthesis of metal nanoparticles and additionally provides a process for recovering precious metals, thanks to which a pure form of corresponding inorganic or organometallic precursors, as well as the precious metals as such can be obtained. The method makes it also possible to obtain metal nanoparticles with catalytic properties, and also to cover a surface with such nanoparticles while restoring the previous characteristics of the catalyst or preparing new catalysts. The method allows using precious metal-containing waste materials directly for the preparation of functional nanomaterials, avoiding use of their pure inorganic salts as such or mixtures thereof. The method provides separation of the particular metals from mixtures thereof, as well as separation of mixtures of organometallic and inorganic precursors to obtain e.g. bimetallic nanoparticles.

To reduce amounts of the precious metals needed to obtain the required performance level of various catalytic reactions catalyzed by surfaces coated with the obtained nanoparticles or metals as such, it is possible to add raw materials other than platinum group elements, such as V, Ti, Ni, Fe, zeolites, carbon and related chemical derivatives, such as oxides and the like. The precious metal used in reactions can as well contain some contaminants, which were not removed completely in the phase transfer process or were added in the course of the process. Such an additional contaminants or additives form the previous step can be included in the metal complex structure. Such additives include: Ti, Co, Ce, Ir, Ni, Cu, Sn, Zn, Zr, V, Ta, Tl, Cr, Mo, Ti, Mn, Re, Fe, Ru, Os and Se.

The method allows to obtain spherical or non-spherical nanoparticles of precious metals by reduction of platinum group metal ions or their complexes to the metallic form.

The most common method for reducing precious metals is carried out using organometallic compounds, sodium borohydride, hydrogen or sodium citrate in the presence of a ligand stabilizer such as: thioles, citrates, phosphates, phosphines, amines, carbonyl compounds, dendrimers and surfactants. The reduction step, as well as the step of precipitation of inorganic or organometallic salts, can require additional heating of the entire system. The metallic nanoparticles or bi- or trimetallic nanoparticles with platinum, palladium and rhodium obtained by reduction can be contaminated by the reducing agent. The reducing agents used comprise hydrogen (H2), ethylene glycol (EG) and other glycols, HCl and polyvinylpyrrolidone (PVP), NaBH₄, KBH₄, plant extracts (e.g. of Diospyros kaki, red pine, Ocimum Sanctum, green tea extract and the like), amino acids, citric acid, flavonoids, substances with various functional groups where oxygen can be present (alcohols, aldehydes, ketones, amines, carboxylic acid and thiolic), heterocyclic compounds, peptides, phenols, polyphenols, polyhydric alcohols, quercetin, reducing sugars, tannic acid, tartaric acid, terpenoids, oleylamine, dodecylamine, octadecylamine, L-ascorbic acid, isoascorbic acid, ascorbates and isoascorbate, dimethylamine borane (DMAB), formic acid, formaldehyde and combinations thereof. Optionally, the method allows to conduct a pre-reduction step, which proceeds in a high-boiling solvent heated from 50 to 350°C in a reducing gas atmosphere. In a subsequent step, reduction can be performed by heating to 250-350°C in a reducing gas or reducing and inert gas atmosphere. The reducing atmosphere can comprise hydrogen, argon, helium, carbon monoxide, or a mixture of hydrogen and nitrogen. According to different working examples a synthesis of ready-to-use catalysts can require heating, up to evaporation or removal of a solvent. This process comprises heating at the temperature range of about 100°C to about 400°C in the inert gas, e.g. nitrogen, atmosphere or under reduced pressure. In the case of complete removal of the solvent, the precursors can be reduced in the solid phase, after optionally adding a surfactant or/and reducing agent.

The reaction mixture can additionally include nanoparticle surface stabilizing agents, or surfactants. The surfactant can be selected from the group of compounds comprising cetyltrimethylammonium halides (bromide, chloride), cethyltriethylammonium halides (bromide, chloride), amines: oleylamine, n-propylamine, butylamine, decylamine, dodecylamine, octadecylamine, oleylamine, pyridine, diethanolamine, triethanolamine, pyrrole, polyvinyl alcohol (PVA), acids: adamantanecarboxylic, eicosanoic, oleic, tartaric, citric, heptanoic acids, poliethylene glycol, polyvinylpyrrolidone, tetrahydrotiophene, phosphates, phosphines, alkyl- and aromatic thiols, salts thereof (e.g., sodium citrate or potassium oleate), a mixture of two or more of said agents. Although the coating agents need not be included into the reaction mixture, they can be additionally included in the mixture before or after the reduction.

The method enables a simple synthesis and purification of large amounts of nanoparticles of the platinum group metals dissolved in the aqueous or organic media. Said metals are converted into complex compounds which are then reduced. The obtained nanoparticles can be further purified or stored properly and used for deposition on surfaces. It is also possible to modify surfaces of the nanoparticles to replace or eliminate the surfactant introduced in the synthesis. The post-synthesis purification of the nanoparticles is aimed at removing the excess of by-products originated from the nanoparticle synthesis and concentrating the nanoparticle solution to the minimal volume. Elimination of PTA and an excess of the surfactant can be achieved by rinsing, ultrafiltration, dialysis and/or precipitation. The elimination of these agents can or cannot lead to aggregation of the nanomaterial obtained before. In the case of the precious metal nanoparticles which are intended to be deposited on solid surfaces, the purification can be unnecessary. In some cases the purification is required, since it allows to eliminate aggregated nanoparticles formed during the synthesis, repeated precipitation and rinsing of the nanoparticles is needed in this case.

The solution containing a metal precursor in the form of a complex of PTA or in the form of a mixture with PTA and a surfactant or/and reductant can be applied onto surfaces after removal of the solvent. The solvent can be removed by heating the solution or free evaporation. Reduction of the metal and forming of the nanoparticles can proceed directly on the surface, or the nanomaterial can be deposited after the reduction step. The deposited nanomaterial can be calcined, which leads to its aggregation, destruction or conversion to the metallic form of the metal. Heating of the substrate, onto which the precious metal material is deposited, can lead to a degradation of the monolayer deposited on the nanoparticles and formation of a metal film or separated nanosurfaces of the metal, depending on a level of surface coverage with the organometallic or inorganic precursor. Preparation of the solution or suspension of the metallic precursor can be made by centrifuging the solution or suspension and removing the supernatant excess.

The further subject-matter of the invention is the use of the method according to the invention for preparation of bimetallic nanoparticles and/or for coating various kinds of substrates, preferably inorganic or organic substrates, and for the preparation of colloidal solutions of the nanoparticles.

The nanoparticles obtained by the method according to the invention can be employed for the preparation of novel catalysts or materials containing precious metals.

By depositing the nanoparticles on surfaces it is possible to restore a material with properties similar to those possessed by the recycled substances before they were used up. It is also possible to render a number of additional features and properties. The nanoparticles can be deposited on ceramic, carbon or other solid surfaces of various polarity and porosity characteristics. It is also possible to apply the nanoparticles or organometallic salts onto the organic surfaces, with particularly advantageous surfaces constructed of polymers e.g. polypropylene or polyethylene terephthalate. It is particularly advantageous to cover cordierite surfaces. Cordierite surfaces could or could not be precoated with a porous precursor, e.g. alumina doped with various substances, such as cerium oxide.

According to the invention, various methods are applicable for separating the precious metals from the acidic metal concentrate and further use of the obtained nanoparticles. Fig. 1 shows a general diagram illustrating possible preferred variants of the invention. According to the diagram, the waste material containing two precious metals PGM1 and PGM2, after comminuting, is dissolved under oxidizing conditions to obtain the concentrates of metal ions PGM1 and PGM2. Then, the first phase transfer agent PTA1 is used to transfer PGM1 to the organic phase. PGM1 separated in this way is converted into nanoparticles, which can be deposited directly on a surface, or nanoparticles obtained in a solution, which can be subsequently deposited on a surface (e.g. by depositing on the surface from the solution, followed by evaporation of a solvent). The precious metal ion concentrate solution after partial or complete separation of PGM1 is treated with the second phase transfer agent PTA2 which transfers PGM2 alone or alternatively a combination of PGM2 and PGM1 residue to the organic phase. The separated PGM2 or the combination of PGM1 plus PGM2 are then processed into nanoparticles, where the PGM1 plus PGM2 combination can be isolated in the form of bimetallic nanoparticles, which are homogeneous or of the core-shell type. Said nanoparticles can be deposited on a surface, as it is described above. The diagram, for the simplicity sake, omits steps related to qualitative and quantitative analysis and precipitation of non-precious or precious metal salts.

The method according to the invention allows to recover effectively the precious metals from the waste materials containing them, and offers a possibility to obtain novel functional nanomaterials. Furthermore, the invention provides a universal method for recycling waste materials, wherein for example in the case of recovering precious metals from catalytic waste materials, the novel catalytic materials can possess enhanced catalytic properties in relation to the starting waste material, if a catalyst substrate is coated with the recovered precious metal nanoparticles e.g. enriched additionally in a second precious metal (bimetallic nanoparticles).

By the process according to the invention, various types of nanoparticles can be obtained in a wide size range from 1 to 100 nm, as well as colloidal microparticles.

### EXAMPLES

### Example 1

Ceramic waste of automotive catalysts containing precious metals (samples B1, A1, A2) were crushed, and then milled into a powder with a grain size of about 0.02 mm. Samples, 1 kg each, of the processed waste materials (samples B1, A1, A2) were weighed our for the subsequent steps of the precious metal recovery and processing process. The morphology of the comminuted raw material for each of the samples was analyzed by means of a scanning electron microscope, and then the initial verification of the sample composition by means of the EDS technique coupled with a scanning electron microscope was conducted. Initial results of the analysis has shown that the total content of precious metals in the analyzed samples did not exceed 1-2%.

Each sample was thermally pretreated at 300°C to enhance elimination of hydrocarbon and carbon itself from catalyst surfaces. Digestion of each sample was conducted by use of two different oxidative mixtures (mixture I and mixture II), with the following compositions of the mixtures:

| Oxidative mixture I | Oxidative mixture II |
|---|---|
| 1920 ml 12M HCl, | 1667 ml 12M HCl |
| 80 ml 4% H₂O₂ | 205 ml 15M HNO₃ |
| | 128 ml 18M H₂SO₄ |

For each 1 kg of the waste material samples 2 l of each oxidative mixture was used.

In the case of digestion using the oxidative mixture I, hydrochloric acid was first added to the samples, followed by portionwise introduction of hydrogen peroxide at the room temperature. After 20 minutes, the proper process temperature was reached. The process was conducted at 70°C for 6 h.

After the digestion step was completed, in order to prepare the acidic metal concentrate, the obtained dark suspension was filtered under reduced pressure, and the resultant precipitate was rinsed with a fresh 6M HCl solution (400 ml). The filtrate from the precipitate filtration was combined with a filtrate from the acid rinse to obtain 2150 ml of the acidic metal concentrate. The analogous conditions (70°C, 6h) were applied for the samples that were dissolved in the oxidative mixture II.

After dissolving in each of the oxidative mixtures, the samples were analyzed by ICP-AAS (mass spectrometry with plasma ionization inductively coupled with the atomic absorption analyzer). Concentrations of the metals obtained for the particular samples were collected in Table 1

**Table 1. Concentrations of the metals for the particular samples obtained after dissolving in the oxidative mixtures (I and II). The samples were analyzed by means of ICP-AAS technique.**

| Sample | B1(I) [mg/L] | B1(II) [mg/L] | A2(I) [mg/L] | A2(II) [mg/L] | A1(I) [mg/L] | A1(II) [mg/L] |
|---|---|---|---|---|---|---|
| Rh | <0.01 | <0.01 | 41 | 62 | 31.9 | 36.6 |
| Pd | 4.8 | 5.2 | 470.7 | 494.1 | 189.7 | 192.8 |
| Pt | 1420 | 1610 | 971 | 1003.4 | 333.5 | 348.5 |
| Al | 9700 | 9630 | 9700 | 9640 | 555 | 532 |
| Fe | 99 | 82 | 7300 | 7540 | 1511 | 1621 |
| Mg | 4600 | 4880 | 4700 | 4420 | 1788 | 1693 |

Subsequent experiments were carried out with the sample B1 (II), i.e. the sample B1 dissolved in the oxidative mixture II. Due to a very high concentration of platinum, low concentration of palladium and a presence of trace amounts of rhodium in the sample, extraction of platinum was conducted, with the remaining metals, including the precious metals (Pd, Rh), considered as the contaminants.

2150 ml of the acidic concentrate of the sample B1 (II) were mixed with a tricaprylmethylammonium chloride solution (Aliquat) in toluene (330 ml, 80 mmol mol/dm³). The mixture was left in contact in extraction vessels for 50 min (preliminary experiments have shown that the equilibrium was reached after about 20 min) at the room temperature (21 ± 2°C). The two-phase mixture was shaken vigorously for 50 minutes, resulting in the transfer of the whole platinum complex into the organic phase. The aqueous and organic phases were separated, followed by returning the aqueous phase to the extraction vessel and mixing with a fresh tricaprylmethylammonium chloride solution (Aliquat) in toluene (330 ml, 80 mmol mol/dm³). The entire procedure of adding the Aliquat additive, separating and mixing was repeated twice. Finally, the collected organic fractions were pooled to give 990 ml of the solution and dodecylamine (6.5 g) was added therein.

This method allows to synthesize pure nanoparticles without a support, and to carry this out, 100 ml of the organic phase was set apart. Next, a freshly prepared and ice-cooled aqueous sodium borohydride solution (40 ml, 0.4 mol/dm³), was slowly added to the reaction mixture, with the magnetic stirrer set to high rotation rate to thoroughly mix the organic complex solution with the reducing compound added. After the two solutions were mixed, the solution color turned from orange to dark orange-brown. On that basis it was concluded that reduction of platinum ions (Pt IV+) to Pt(0) occurred. Following further stirring for 3 h, the organic phase was separated and rinsed with distilled water. The organic phase was evaporated on the rotary evaporator to 10 ml volume, and mixed with 300 ml of ethanol to eliminate a dodecylamine excess in the precipitation process. After cooling the obtained solution, the mixture was centrifuged on a rotary centrifuge at a rate of 9000 rpm for 8 minutes (a rotor diameter of 11 cm), and the resultant sediment was rinsed with fresh ethanol. The obtained precipitate was dissolved in toluene and analyzed by TEM. Photographs of the obtained nanoparticles were presented on Fig. 2.

The remained amount of the platinum-Aliquat complex in toluene was transferred to the sedimentation vessel, wherein a ceramic cordierite block with 400 CPI structure and size of 10x10x25 cm was placed. The cordierite material was impregnated with the platinum-Aliquat complex solution and then dried at 110°C for 15 min. After the predrying period, the ceramic block was placed in a pipe furnace with the internal temperature of 450°C. The thermal reduction step was carried out for 15 min under an inert gas atmosphere. To impregnate the cordierite surface with more nanoparticles, the impregnation, drying and calcination process was repeated a number of times. A cordierite fragment with deposited nanoparticles was studied by means of a scanning electron microscope with an EDX unit. Results of the measurements are shown on Fig. 3.

### EXAMPLE 2

The waste material was prepared in an analogous manner as in Example 1. Scraps of the waste materials were crushed and milled to obtain 2 kg of a powder with maximum particle size of 0.02 mm. In each case the content of platinum group metals in the analyzed samples did not exceed 1.5%. After crushing, the samples were pretreated thermally at 300°C, and after the pretreatment the powders were subjected to the leaching process, which only the Mixture II was used in an amount of 3.7 L. The process was conducted at 65°C, with the reaction time of 7 h. The resultant dark suspension was filtered under reduced pressure, and the precipitate formed was washed with a fresh 3M HCl solution (500 ml). The filtrate was denoted as sample B0B. The obtained filtrate was diluted with 2 L of 2 M HCl, and then a trisodium phosphate dihydrate solution (500 g in 2600 ml of water) was added in an amount of 1100 ml. The resulting precipitate was filtered off and washed with a fresh aliquot of 0.05 M HCl solution. The resultant solution was concentrated by evaporating 2.3 L of the solvent. The platinum group metal solution composition (PGM solution - sample BIB) after filtration was subjected to ICP-OES/AAS analysis, with all information collected in Table 2. The table resents also results for the solutions after dissolving the precious metals (solution BIB) and subsequent solutions obtained in the extraction processes and precipitation in subsequent solutions. Denotation of the samples were explained in the text below Table 2.

**Table 2 ICP-MS analysis results obtained from the samples after dissolving the precious metals (solution BIB) and further solutions obtained in the extraction processes and precipitation in subsequent solutions.**

| | Rh [mg/L] | Pd [mg/L] | Pt [mg/L] | Al [mg/L] | Fe [mg/L] | Mg [mg/L] |
|---|---|---|---|---|---|---|
| **B0B** | 32.3 ± 0.3 | 189.7 ± 0.4 | 276.5 ± 1.5 | 553.3 ±0. 1 | 1591 ± 4 | 1462.0 ± 0.6 |
| **B1B** | 29.8 ± 0.3 | 114 ± 1 | 183 ± 2 | 6.1 ±0.1 | 1117 ± 4 | 24.0 ± 0.6 |
| **B4B** | 6.72 ± 0.03 | 24.8 ± 0.2 | 39.5 ± 0.3 | 6985.4 ± 200 | 899 ± 2 | 3549 ± 200 |
| **B7B** | 20.5 ± 0.7 | 30 ± 1 | 124 ± 1 | < 3.5 | < 29 | 18.6 ± 0.7 |
| **B7.2B** | 2.78 ± 0.02 | 5.1 ± 0.5 | 289 ± 3 | < 3.5 | 4.6 ± 2 | 0.93 ± 0.07 |
| **B9B** | 20.1 ± 0.1 | 24.6 ± 0.2 | 37.1 ± 0.4 | < 3.5 | < 29 | 18.5 ± 0.7 |
| **B13B** | 0.442 ± 0.005 | 0.170 ± 0.004 | 1.60 ± 0.03 | < 3.5 | < 29 | 33.7 ± 0.2 |
| **B16B** | 0.256 ± 0.001 | 0.055 ± 0.002 | 0.066 ± 0.003 | < 3.5 | < 29 | 28.0 ± 0.3 |
| **B20B** | 0.29 ± 0.01 | 560 ± 1 | 958 ± 15 | < 3.5 | < 29 | 5.07 ± 0.03 |
| **B21B** | 0.104 ± 0.002 | 265 ± 3 | 5.26 ± 0.02 | < 3.5 | 45.5 ± 0.5 | 10.5 ± 0.1 |

In the subsequent step the extraction was carried out to extract platinum, palladium and rhodium from the hydrochloric acid solution used for leaching. The post-leaching solution is composed mainly from hydrochloric acid (about 3M HCl) and platinum, palladium and rhodium ions, as well as contaminants. Fig. 4 presents a block diagram of the project (Scheme 2) presenting consecutive steps of separating the metals by means of successive extractants. First, a solution comprising a mixture of the precious metals created by digesting of the waste materials is separated. In subsequent steps, both organometallic salts of individual metals of the 95-98% purity, as well as organometallic or inorganic salts of metal mixtures, e.g. in the 2:1 ratio, can be isolated. Both organometallic salts and inorganic salts can be used for depositing the precious metals on solid surfaces. The results of ICP-OES/AAS measurements acquired for the particular solutions obtained were collected in Table 2. The table presents also the analytical steps aimed at determining yields of the extraction and precipitation processes. Solutions in the organic phase were not analyzed directly due to limitations of the ICP technique, but aqueous solutions from washing the organic phases and aqueous solutions from precipitation of metal deposit from organometallic salts were analyzed. It is not necessary to use such a high number of control steps, but they were conducted to obtain the precise balance of flow of the precious elements.

In the first step, after separating a part of aluminum, iron and magnesium in the form of phosphate salts, the separate precipitate of said salts was dissolved in HCl. The obtained solution denoted B4B contained mainly the listed ions and traces of contaminating precious metals. The filtrate from the precipitate (B1B) was subjected to extraction with 900 ml of a LIX solution (1%) in toluene. The obtained aqueous phase (B7B) was depleted of the major part of palladium, and the obtained organic fraction B8B was subjected to a palladium isolation procedure. The palladium LIX solution can be also used as an organometallic precursor in the nanoparticle synthesis. After water rinse and then precipitation with 1200 ml of thiourea solution (1 M) in HCl (1 M) the B8B phase allowed to obtain the aqueous B21B fraction containing palladium of about 98% purity.

The aqueous phase B7B obtained in the process of extraction with LIX was subjected to further purification to isolate platinum. To this end, the B7B solution was subjected to extraction with 1200 ml (0.01M) of Aliquat. The organic phase (B7.1B) obtained in this way, after water (500 ml) rinse was subjected to precipitation with 500 ml of thiourea solution (1 M) in HCl (1 M). The aqueous B7.2B phase obtained in this way was rich in platinum of the purity about 95%. The platinum solution in Aliquat (B7.1B) obtained in the earlier step was used for the platinum nanoparticle synthesis. The obtained nanoparticles possessed analogous morphology and composition as the platinum nanoparticles obtained in the first Example).

The B9B fraction left after isolation of platinum and composed mainly of palladium and platinum was subjected to subsequent extraction, this time with an excess of Aliquat. To this end, an extraction was conducted twice with 400 ml of the 0.05M solution of Aliquat in toluene. The organic phases were combined. Analysis of the combined aqueous phases (B13B) indicates the trace content of precious metals in that phase, which confirms their transfer into the toluene phase. The obtained toluene phase (B9.1B) was washed with water. The obtained aqueous fraction (B16B) practically contained no metals, which demonstrates strong complexing of the precious metals by Aliquat. The obtained B17B solution containing palladium and platinum ions in the 2:1 ratio was further employed for a synthesis of bimetallic Pt/Pd nanoparticles. Optional precipitation of the solution with 500 ml of the thiourea solution (1M) in HCl (1M) allows to separate metals in the form of inorganic salts in the solution (B20B).

In a 100 ml round-bottomed flask, a solution of 20 ml B20B was mixed with polyvinylpyrrolidone (PVP) in a constant ratio of 1:9 (PVP, Mw. 55000, Sigma Aldrich) and 30 ml of 1,4-butanediol (99%, Sigma-Aldrich). The reaction was carried out at the room temperature. The reaction mixture was heated to 140°C in an inert gas atmosphere for 10 min. Then the solution was heated to 230°C at a 5°C/min rate, and the conditions were maintained for 1.5 h in the argon atmosphere air under reflux condenser. In the course of the reaction, the solution's color turned from yellow-orange to dark brown. After the reaction was complete, the mixture was cooled to the room temperature at a rate of about 15°C/min. To the cooled mixture a metanol/aceton mixture in a 1:1 ratio was added, and after the addition, the black precipitate of the Pt/Pd nanoparticles was precipitated. The precipitate was separated from the solution by centrifuging at a speed of 4000 rpm for 10 minutes. After each centrifugation the precipitate was washed with a fresh portion of acetone till the supernatant became colorless. The precipitate contained nanoparticles of the molecular formula Pt_{0.65}Pd_{0.35}, which were dissolved in ethanol. The obtained nanoparticles are characterized by a diameter of about 3-4 nm, relatively wide dispersion of size and a significant fraction of aggregates up to microparticles built from the nanoparticles, as evidenced by the photographs taken by means of a transmission electron microscope that are presented on Fig. 5. The chemical composition and morphology of solid films made of such nanoparticles at the cordierite substrate were subjected to the EDS (SEM) analysis.

To deposit the nanoparticles at solid surfaces, the inorganic (cordierite) substrate was impregnated with a solution made by mixing a paste formed by evaporating the toluene B17B solution, with PVP and butanediol in the weight ratio of 1:8:10. That method of depositing allowed also to deposit the nanoparticles on the solid substrate.

30 ml od the B9.1B solution were mixed with 20 ml of distilled water, and then 1.58 g of Aliquat were dissolved in 200 ml of toluene in a 250 ml round-bottomed flask by sonication. These two solutions were combined and stored till the precious metals ions were transferred into the organic phase, as it was observed by a change in colors of both layers. The aqueous layer was removed, and to the remainder of the reaction mixture 680 µl of dodecanethiol and 230 mg of dodecylamine was added, with vigorous stirring of the reaction mixture. The mixture was transferred to the cooling bath of ammonium chloride/ice for 15 min., and then gaseous hydrogen was bubbled through it for 25 min. The solution was stirred for 4 h and then shaken with 300 ml of water, and the aqueous layer was removed and the organic layer was concentrated on the rotary evaporator at the temperature below 35°C. To the black semi-solid paste of nanoparticles 400 ml of acetone was added, followed by collecting the nanoparticles by centrifuging for 4 min. at the speed of 6000 rpm. The precipitate was washed with 50 ml of acetonitrile and 150 ml of ethanol, and then left for drying. Later, the nanoparticles were suspended in toluene. The diameter of the nanoparticles obtained in this way is 3.0 nm, as evidenced by the TEM photographs presented on Fig. 3.

The bimetallic Pt/Pd nanoparticles obtained in this way were characterized by irregular shapes, with rather substantially expanded surface, that can be very useful from the perspective of their catalytic properties. The photographs from an electron microscope of the Pt/Pd nanoparticles are presented on Fig. 6.

## Claims

1. A method for recycling precious metals from the waste materials comprising the following steps:
**a)** providing a powder of the waste material with the particle size not greater than 0.03 mm, obtained directly from waste materials by mechanical grinding thereof,
wherein the grinding can be optionally preceded by thermal treatment, preferably burning or calcining the waste materials, or the waste material powder obtained by grinding could be thermally treated, preferably by burning or calcination;
**b)** digesting the powder obtained in step (a) under oxidizing conditions in the presence of a mixture of concentrated hydrochloric acid and hydrogen peroxide or a mixture of concentrated hydrochloric, nitric and sulfuric acids, until complete digestion of the precious metals contained therein, to produce a suspension,
wherein the digesting solution to digested material mass ratio is from 1:10 to 10:1, and preferably amounts to 3:1;
**c)** isolating a sediment from the suspension obtained in step (b) after the digestion to provide an acidic concentrate of the precious metal ions, and optionally rinsing the isolated sediment with a mixture of inorganic or organic acids at a concentration of 0.001 M to 12 M, and combining the metal ion solution resulted from rinsing the sediment with acidic concentrate obtained after isolating the sediment;
**d)** a qualitative analysis of the composition of the acidic precious metal ion concentrate, optionally enriched with the precious metal ion solution resulting from rinsing the sediment, of step (c), combined with a quantitative analysis of their concentrations by ICP, and preferably ICP-MS;
**e)** selectively isolating precious metals from the precious metal ion concentrate, optionally enriched with the precious metal ion solution resulting from rinsing the sediment, of step (c), and from contaminants present therein, by means of a phase transfer agent (PTA), which comprises an organic reagent selected from the group of phosphates, thiophosphates, polyphosphates, amines, ammonium salts, alcohols or an inorganic reagent selected from the group of neutral salts or metals, and preferably comprises Aliquat®, trioctylamine or LIX®, wherein the selective isolation of the precious metals can optionally be preceded by precipitation of contaminating metals with the assistance of precipitating agents;
**f)** precipitating the precious metals isolated in step (e) in the form of inorganic or organometallic salts and/or reducing the precious metals optionally in the presence of a surfactant to obtain nanoparticles selected from the group of monometallic, bimetallic, trimetallic, multimetallic nanoparticles, non-precious metal-doped nanoparticles, core-shell type nanoparticles or hollow nanoparticles,
said reducing agent being selected from the group comprising: hydrogen, glycol, hydrochloric acid, polyvinylpyrrolidone, NaBH₄, KBH₄, plant extracts, such as a Diospyros kaki extract, red pine extract, Ocimum Sanctum extract, green tea extract, amino acids, citric acid, flavonoids, substances with oxygen-containing functional groups, such as alcohols, aldehydes, ketones, amines, carboxylic acids, thioles, heterocyclic compounds, peptides, phenols, polyphenols, polyhydric alcohols, quercetin, reducing sugars, tannic acid, tartaric acid, terpenoids, oleylamine, dodecylamine, octadecylamine, ascorbic acid and its derivatives, dimethylamine borane (DMAB), formic acid, formaldehyde or combinations thereof.

2. The process according to Claim 1, **characterized in that** steps (d), (e) and/or (f) are repeated together or separately in the same or altered order.

3. The process according to Claim 1 or 2, **characterized in that** the thermal treatment of the waste materials in the step (a) is carried out at 250°C for about 6 hours.

4. The process according to Claim 1 or 2, **characterized in that** the thermal treatment of the waste materials is carried out by burning at 800-1000°C or calcining at 200-300°C.

5. The process according to any one of Claims 1-4, **characterized in that** step (b) is carried out at 45°C for 8 hours or at 70°C for more than 2 hours, wherein the concentration of hydrochloric acid is from 0.001 M to 12M, the concentration of hydrogen peroxide is from 0.1% to 5%, the concentration of nitric acid is from 0.001 M to 15 M, and the concentration of sulfuric acid is 0.01 M to 18 M.

6. The process according to any one of Claims 1-5, **characterized in that** in step (c) isolating the precipitate is carried out by filtering or centrifuging, preferably by filtering under reduced pressure.

7. The process according to any one of Claims 1-6, **characterized in that** the acids employed in step (c) for rinsing the precipitate are selected from the group consisting of: hydrochloric, sulfuric, nitric, orthophosphoric or hydrofluoric acids.

8. The process according to any one of Claims 1-7, **characterized in that** the precipitating agents employed for separating from the solution the contaminating metals in step (e) and the precious metals in step (f) comprise phosphate salts and thiourea.

9. Use of the method as defined in any of Claims 1 to 8 for the preparation of bimetallic nanoparticles and/or coating substrates of various types, preferably inorganic or organic substrates, and for the preparation of colloidal nanoparticle solutions.

## Patentansprüche

1. Ein Verfahren zum Recyclen von Edelmetallen aus Abfall, das folgende Schritte umfasst:
**a)** Bereitstellung des Pulvers von Abfallmaterial mit Partikelgröße von nicht mehr als 0,03 mm, gewonnen direkt aus dem bereitgestellten Abfall durch seine mechanische Zerkleinerung, wobei der Zerkleinerung wahlweise eine thermische Behandlung, vorzugsweise Verbrennen oder Kalzinieren des Abfalls, vorausgehen kann, oder das infolge der Zerkleinerung erhaltene Abfallmaterialpulver thermisch behandelt werden kann, vorzugsweise durch Verbrennen oder Kalzinieren;
**b)** Aufschließen des im Schritt (a) gewonnenen Pulvers unter oxidierenden Bedingungen in Gegenwart eines Gemisches aus konzentrierter Salzsäure und Wasserstoffperoxid oder eines Gemisches aus konzentrierter Salz-, Salpeter- und Schwefelsäure, bis zum vollständigen Aufschließen der darin enthaltenen Edelmetalle, um eine Suspension herzustellen,
wobei das Massenverhältnis der aufschließenden Lösung zum aufgeschlossenen Material von 1:10 bis 10:1 und vorzugsweise 3:1 ist;
**c)** Isolierung des Sediments aus der im Schritt (b) erhaltenen Suspension nach dem Aufschließen, um ein saures Konzentrat der Edelmetall-Ionen zu erhalten, und gegebenenfalls Ausspülen des isolierten Sediments mit einem Gemisch anorganischer oder organischer Säuren mit einer Konzentration von 0,001 M bis 12 M und Vermischen der nach dem Ausspülen des Sediments erhaltenen Metallionenlösung mit dem nach der Isolierung des Sediments erhaltenen sauren Konzentrat;
**d)** eine qualitative Analyse der Zusammensetzung des sauren Edelmetallionen-Konzentrats, gegebenenfalls angereichert mit der nach dem Ausspülen des Sediments erhaltenen Edelmetallionenlösung aus dem Schritt (c), kombiniert mit einer quantitativen Analyse ihrer Konzentrationen mittels ICP und vorzugsweise ICP-MS;
**e)** selektive Isolierung von Edelmetallen aus dem Edelmetallionenkonzentrat, gegebenenfalls angereichert mit der Edelmetallionenlösung, die aus dem Ausspülen des Sediments im Schritt (c) und aus darin vorhandenen Verunreinigungen resultiert, mittels eines Phasentransfermittels (PTA), das ein organisches Reagenz, ausgewählt aus der Gruppe der Phosphate, Thiophosphate, Polyphosphate, Amine, Ammoniumsalze, Alkohole oder ein anorganisches Reagenz, ausgewählt aus der Gruppe der neutralen Salze oder Metalle, und vorzugsweise Aliquat®, Trioctylamin oder LIX® enthält, wobei der selektiven Isolierung der Edelmetalle gegebenenfalls eine Ausfällung von kontaminierenden Metallen mit Hilfe von Fällungsmitteln vorausgehen kann;
**f)** Ausfällen der in Schritt (e) isolierten Edelmetalle in Form von anorganischen oder organometallischen Salzen und/oder Reduzieren der Edelmetalle gegebenenfalls mit Hilfe eines Tensids, um Nanopartikeln zu erhalten, die aus der Gruppe der mono-, bi-, tri- und multimetallischen Nanopartikeln, dotierten Nanopartikeln von Nichtedelmetallen, Kern-Schale-Typ-Nanopartikeln oder hohlen Nanopartikeln ausgewählt sind, wobei das Reduktionsmittel aus der Gruppe ausgewählt wird, die umfasst: Wasserstoff, Glykol, Salzsäure, Polyvinylpyrrolidon, NaBH₄, KBH₄, Pflanzenextrakte, wie ein Diospyros-Kaki-Extrakt, Rotkiefer-Extrakt, Ocimum Sanctum-Extrakt, Grüntee-Extrakt, Aminosäuren, Zitronensäure, Flavonoide, Substanzen mit sauerstoffhaltigen funktionellen Gruppen, wie Alkohole, Aldehyde, Ketone, Amine, Karbonsäuren, Thiole, heterocyclische Verbindungen, Peptide, Phenole, Polyphenole, mehrwertige Alkohole, Quercetin, reduzierende Zuckerarten, Gerbsäure, Weinsäure, Terpenoide, Oleylamin, Dodecylamin, Octadecylamin, Ascorbinsäure und ihre Derivate, Dimethylaminboran (DMAB), Ameisensäure, Formaldehyd oder Kombinationen davon.

2. Das Verfahren nach Anspruch 1, **dadurch gekennzeichnet, dass** die Schritte (d), (e) und/oder (f) zusammen oder getrennt in der gleichen oder einer geänderten Reihenfolge wiederholt werden.

3. Das Verfahren nach Anspruch 1 oder 2, **dadurch gekennzeichnet, dass** die thermische Behandlung der Abfälle im Schritt (a) bei 250°C für etwa 6 Stunden durchgeführt wird.

4. Das Verfahren nach Anspruch 1 oder 2, **dadurch gekennzeichnet, dass** die thermische Behandlung der Abfälle durch Verbrennung bei 800-1000°C oder Kalzinierung bei 200-300°C durchgeführt wird.

5. Das Verfahren nach einem der Ansprüche 1-4, **dadurch gekennzeichnet, dass** der Schritt (b) bei 45°C für 8 Stunden oder bei 70°C für mehr als 2 Stunden durchgeführt wird., wobei die Konzentration von Salzsäure von 0,001 M bis 12 M, die Konzentration von Wasserstoffperoxid von 0,1% bis 5%, die Konzentration von Salpetersäure von 0,001 M bis 15 M und die Konzentration von Schwefelsäure von 0,01 M bis 18 M ist.

6. Das Verfahren nach einem der Ansprüche 1-5, **dadurch gekennzeichnet, dass** im Schritt (c) Isolierung der Fällung durch Filtrieren oder Zentrifugieren, vorzugsweise durch Filtrieren unter vermindertem Druck, durchgeführt wird.

7. Das Verfahren nach einem der Ansprüche 1-6, **dadurch gekennzeichnet, dass** die im Schritt (c) zum Ausspülen der Fällung verwendeten Säuren aus der Gruppe ausgewählt sind, die aus Salz-, Schwefel-, Salpeter-, Salpeter-, Orthophosphor- oder Fluorwasserstoffsäuren besteht.

8. Das Verfahren nach einem der Ansprüche 1-7, **dadurch gekennzeichnet, dass** die zur Trennung der kontaminierenden Metalle im Schritt (e) und der Edelmetalle im Schritt (f) aus der Lösung eingesetzten Fällungsmittel Phosphatsalze und Thioharnstoff umfassen.

9. Verwendung des in einem der Ansprüche 1 bis 8 definierten Verfahrens zur Herstellung von bimetallischen Nanopartikeln und/oder Beschichtungssubstraten verschiedener Typen, vorzugsweise anorganischer oder organischer Substrate, und zur Herstellung von kolloidalen Nanopartikellösungen.

## Revendications

1. Méthode de recyclage de métaux précieux à partir des déchets comprenant les étapes consistant à :
**a)** fournir une poudre de déchets à une granulométrie au plus égale à 0,03 mm, obtenue directement à partir de déchets par broyage mécanique de ceux-ci,
où le broyage peut être éventuellement précédé de traitement thermique, de préférence combustion ou calcination des déchets, ou la poudre de déchets obtenues par broyage pourrait être traitée thermiquement, de préférence par combustion ou calcination ;
**b)** digérer la poudre obtenue à l'étape (a) dans des conditions oxydantes en présence d'un mélange d'acide chlorhydrique concentré et de peroxyde d'hydrogène ou d'un mélange d'acides chlorhydrique, nitrique et sulfurique concentrés, jusqu'à la digestion complète des métaux précieux qu'il contient, pour produire une suspension,
dans lequel le rapport massique de la solution de digestion au matériau digéré est de 1:10 à 10:1, et s'élève de préférence à 3:1 ;
**c)** isoler un sédiment de la suspension obtenue à l'étape (b) après la digestion pour fournir un concentré acide des ions de métaux précieux, et éventuellement rincer le sédiment isolé avec un mélange d'acides inorganiques ou organiques à une concentration de 0,001 M à 12 M, et à combiner la solution d'ions métalliques résultant du rinçage du sédiment avec un concentré acide obtenu après l'isolation du sédiment ;
**d)** effectuer une analyse qualitative de la composition du concentré d'ions de métaux précieux acides, éventuellement enrichi en solution d'ions de métaux précieux issue du rinçage du sédiment, de l'étape (c), combinée à une analyse quantitative de leurs concentrations par ICP, et de préférence par ICP-MS ;
**e)** isoler sélectivement les métaux précieux du concentré d'ions de métaux précieux, éventuellement enrichi en solution d'ions de métaux précieux résultant du rinçage du sédiment, de l'étape (c), et des contaminants qui y sont présents, au moyen d'un agent de transfert de phase (PTA), qui comprend un réactif organique choisi dans le groupe des phosphates, thiophosphates, polyphosphates, amines, sels d'ammonium, alcools ou un réactif inorganique choisi dans le groupe des sels ou métaux neutres, et comprend de préférence Aliquat®, trioctylamine ou LIX®, dans lequel l'isolation sélective des métaux précieux peut éventuellement être précédée d'une précipitation de métaux contaminants à l'aide d'agents de précipitation ;
**f)** précipiter Ides métaux précieux isolés à l'étape (e) sous forme de sels inorganiques ou organométalliques et/ou réduire les métaux précieux, éventuellement en présence d'un tensioactif pour obtenir des nanoparticules choisies dans le groupe des nanoparticules monométalliques, bimétalliques, trimétalliques, multimétalliques, des nanoparticules dopées aux métaux non précieux, des nanoparticules de type coeur-coquille ou des nanoparticules creuses,
ledit agent réducteur étant choisi dans le groupe comprenant : hydrogène, glycol, acide chlorhydrique, polyvinylpyrrolidone, NaBH4, KBH₄, extraits de plantes, comme un extrait de Diospyros kaki, extrait de pin rouge, Extrait d'Ocimum Sanctum, extrait de thé vert, acides aminés, acide citrique, flavonoïdes, substances avec des groupes fonctionnels contenant de l'oxygène, tels que les alcools, aldéhydes, cétones, aminés, acides carboxyliques, thioles, composés hétérocycliques, peptides, phénols, polyphénols, alcools polyhydriques, quercétine, sucres réducteurs, acide tannique, acide tartrique, terpénoïdes, oléylamine, dodécylamine, octadécylamine, acide ascorbique et ses dérivés, diméthylamine borane (DMAB), acide formique, formaldéhyde ou des combinaisons de ceux-ci.

2. Méthode selon la revendication 1, **caractéristique en ce que** les étapes (d), (e) et/ou (f) sont répétées ensemble ou séparément dans le même ordre ou dans un ordre modifié.

3. Méthode selon la revendication 1 ou 2, **caractéristique en ce que** le traitement thermique des déchets à l'étape (a) est effectué à 250°C pendant environ 6 heures.

4. Méthode selon la revendication 1 ou 2, **caractéristique en ce que** le traitement thermique des déchets est effectué par combustion à 800-1000°C ou par calcination à 200-300°C.

5. Méthode selon l'une quelconque des revendications 1 à 4, **caractérisé en ce que** l'étape (b) est effectuée à 45°C pendant 8 heures ou à 70°C pendant plus de 2 heures, dans lequel la concentration d'acide chlorhydrique est de 0,001 M à 12 M, la concentration de peroxyde d'hydrogène est de 0,1% à 5%, la concentration d'acide nitrique est de 0,001 M à 15 M et la concentration d'acide sulfurique de 0,01 M à 18 M.

6. Procédé selon l'une quelconque des revendications 1 à 5, **caractérisé en ce que** dans l'étape (c), l'isolation du précipité est réalisé par filtration ou centrifugation, de préférence par filtration sous pression réduite.

7. Méthode selon l'une quelconque des revendications 1 à 6, **caractérisé en ce que** les acides employés à l'étape (c) pour rincer le précipité sont choisis dans le groupe constitué par les acides chlorhydrique, sulfurique, nitrique, orthophosphorique ou fluorhydrique.

8. Méthode selon l'une quelconque des revendications 1 à 7, **caractérisé en ce que** les agents précipitants employés pour séparer de la solution les métaux contaminants à l'étape (e) et les métaux précieux à l'étape (f) comprennent des sels de phosphate et de la thiourée.

9. Utilisation de la méthode telle que définie dans l'une quelconque des revendications 1 à 8 pour la préparation de nanoparticules bimétalliques et/ou de substrats de revêtement de divers types, de préférence des substrats inorganiques ou organiques, et pour la préparation de solutions colloïdales de nanoparticules.
